# EUROPEAN PATENT APPLICATION

(11) **EP 4 550 918 A1**
(43) Date of publication of application: **07.05.2025**
(21) Application number: 22949416.6
(22) Date of filing: 30.06.2022
(51) Int. Cl.: H04W 72/1273, H04W 72/20

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/026270
(87) International publication number: WO 2024/004143

(57) **Abstract**

A terminal according to one aspect of the present disclosure includes a receiving section that receives information regarding transmission configuration indication (TCI) state for multiple types of signals, and a control section that, when a time offset between downlink control information and a downlink signal indicated by the downlink control information is smaller than a threshold and when the TCI state is associated with a physical cell identifier (PCI) different from a PCI of a serving cell, determines a quasi co-location (QCL) assumption for the downlink signal. According to one aspect of the present disclosure, it is possible to appropriately determine a QCL assumption.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information regarding quasi-co-location (QCL) (QCL assumption / Transmission Configuration Indication (TCI) state / spatial relation).

It is studied that a TCI state applicable to multiple types of signals (channels / reference signals) is indicated by downlink control information. However, a relationship between a timing of the indication and a QCL assumption / TCI state to be applied to the signal is indefinite. Unless such a relationship is definite, degradation in communication quality, throughput reduction, and the like may occur.

Thus, an object of the present disclosure is to provide a terminal, a radio communication method, and a base station that appropriately determine a QCL assumption.

### Solution to Problem

A terminal according to one aspect of the present disclosure includes a receiving section that receives information regarding transmission configuration indication (TCI) state for multiple types of signals, and a control section that, when a time offset between downlink control information and a downlink signal indicated by the downlink control information is smaller than a threshold and when the TCI state is associated with a physical cell identifier (PCI) different from a PCI of a serving cell, determines a quasi co-location (QCL) assumption for the downlink signal.

### Advantageous Effects of Invention

According to one aspect of the present disclosure, it is possible to appropriately determine a QCL assumption.

### Brief Description of Drawings

[FIG. 1] FIGS. 1A and 1B show examples of a unified/common TCI framework.
[FIG. 2] FIGS. 2A and 2B show examples of DCI-based TCI state indication.
[FIG. 3] FIG. 3 shows an example of application time for unified TCI state indication.
[FIG. 4] FIG. 4 shows an example of a default QCL assumption for a PDSCH.
[FIG. 5] FIG. 5 shows an example of a DCI decoding period.
[FIG. 6] FIG. 6 shows an example of a DCI decoding period for two CORESETs.
[FIG. 7] FIG. 7 shows an example of a DCI decoding period for a CORESET associated with a CSS and a USS.
[FIG. 8] FIG. 8 shows an example of a determination operation for default QCL assumption.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (Search Space Set)

In NR, one or more search space (SS) sets are configured for the UE. The SS set is a set of PDCCH candidates monitored by the UE. The SS set is also referred to as a PDCCH search space set, a search space, and so on.

The UE monitors PDCCH candidates in one or more SS sets. The one or more SS sets may include at least one of an SS set common to one or more UEs (common search space (CSS) set) and a UE-specific SS set (UE-specific search space (USS) set).

The CSS set may include, for example, at least one of the following.
- Type 0-PDCCH CSS set
- Type OA-PDCCH CSS set
- Type 1-PDCCH CSS set
- Type 2-PDCCH CSS set
- Type 3-PDCCH CSS set

The type 0-PDCCH CSS set may represent a CSS set used to monitor a DCI format cyclic redundancy check (CRC)-scrambled by a System Information-Radio Network Temporary Identifier (SI-RNTI) in a given cell (for example, a primary cell). In the present disclosure, the type 0-PDCCH CSS set may be referred to as a CSS / CSS set of type 0.

The type 0-PDCCH CSS set may be configured for the UE, based on information in a master information block (MIB) communicated on a broadcast channel (Physical Broadcast Chanel (PBCH)) (for example, a Radio Resource Control (RRC) parameter "pdcch-ConfigSIB1").

Alternatively, the type 0-PDCCH CSS set may be configured based on information in information regarding a cell-specific PDCCH (cell-specific PDCCH information, for example, an RRC parameter "PDCCH-ConfigCommon") (for example, an RRC parameter "searchSpaceSIB1" or "searchSpaceZero").

The cell-specific PDCCH information may be notified to the UE by system information (for example, system information block (SIB) 1) or UE-specific RRC signaling (for example, configuration information for synchronization in an RRC reconfiguration message (for example, an RRC parameter "ReconfigurationWithSync")).

The type OA-PDCCH CSS set may represent a CSS set used to monitor a DCI format CRC-scrambled by an SI-RNTI in a given cell (for example, a primary cell). The type 0A-PDCCH CSS set may be configured based on information in cell-specific PDCCH information (for example, an RRC parameter "searchSpaceOtherSystemInformation"). In the present disclosure, the type 0A-PDCCH CSS set may be referred to as a CSS / CSS set of type 0A.

The type 1-PDCCH CSS set may represent a CSS set used to monitor a DCI format CRC-scrambled by a Random Access (RA)-RNTI or a TC-RNTI in a given cell (for example, a primary cell). The type 1-PDCCH CSS set may be configured based on information in cell-specific PDCCH information (for example, an RRC parameter "ra-SearchSpace"). In the present disclosure, the type 1-PDCCH CSS set may be referred to as a CSS / CSS set of type 1.

The type 2-PDCCH CSS set may represent a CSS set used to monitor a DCI format CRC-scrambled by a Paging (P)-RNTI in a given cell (for example, a primary cell). The type 2-PDCCH CSS set may be configured based on information in cell-specific PDCCH information (for example, an RRC parameter "pagingSearchSpace"). In the present disclosure, the type 2-PDCCH CSS set may be referred to as a CSS / CSS set of type 2.

The type 3-PDCCH CSS set may represent a CSS set used to monitor at least one of DCI formats CRC-scrambled by a Slot Format Indicator (SFI)-RNTI, an INT-RNTI, a TPC-PUSCH-RNTI, a TPC-PUCCH-RNTI, and a TPC-SRS-RNTI. The type 3-PDCCH CSS set may be configured based on information in information regarding a UE-specific PDCCH (UE-specific PDCCH information, for example, an RRC parameter "PDCCH-Config") (for example, an RRC parameter "SearchSpace"). The UE-specific PDCCH information may be notified to the UE by UE-specific RRC signaling (for example, an RRC reconfiguration message). In the present disclosure, the type 3-PDCCH CSS set may be referred to as a CSS / CSS set of type 3.

The USS set may represent a USS set used to monitor a DCI format CRC-scrambled by a C-RNTI or a CS-RNTI. The USS set may be configured based on information in UE-specific PDCCH information (for example, an RRC parameter "SearchSpace").

A control resource set (CORESET) is associated with each such SS set as that described above. The CORESET may include multiple types (for example, CORESET #0, a (cell-specific) CORESET common to one or more UEs (common CORESET), and a UE-specific CORESET (dedicated CORESET)).

CORESET #0 may be configured based on information in the MIB or the cell-specific PDCCH information (for example, the RRC parameter "PDCCH-ConfigCommon") (for example, an RRC parameter "ControlResourceSetzero"). CORESET #0 may be associated with any of the CSS set or the USS set.

The common CORESET set may be configured based on information in the cell-specific PDCCH information (for example, the RRC parameter "PDCCH-ConfigCommon") (for example, an RRC parameter "commonControlResourceSet"). The common CORESET set may be associated with any of the CSS set or the USS set.

The UE-specific CORESET may be configured based on information in the UE-specific PDCCH information (for example, the RRC parameter "PDCCH-Config") (for example, an RRC parameter "ControlResourceSet"). The CORESET may be associated with any of the CSS set or the USS set. A maximum number of the CORESETs configurable for each bandwidth part (BWP) in a cell may be defined in a specification.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information regarding quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such multiple different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure and sQCL (spatial QCL) may be usde interchangeably.

For the QCL, multiple types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information regarding QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure / Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC." Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured). In a case of two DL RSs, multiple QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification / RRC IE / TCI State}

A TCI-State (TCI state) associates one or two DL reference signals (RSs) with a corresponding QCL type. If an additional physical cell identifier (PCI) is configured for the RS, the same value is configured for both of the DL RSs.

### (Unified/common TCI Framework)

With a unified TCI framework, multiple types of (UL/DL) channels / RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be multiple TCI states configured by an RRC parameter or multiple TCI states (active TCI states, active TCI pool, set) activated by a MAC CE among the multiple TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling / physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that multiple (two) TCI states common to UL and DL are notified/configured/indicated for the UE, the multipleTCI states being for multiple (two) TRPs (joint TCI states for multiple TRPs) .

For example, description "N = 2, M = 2" may mean that multiple (two) UL TCI states and multiple (two) DL TCI states for multiple (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For Rel. 18 (or later versions), support of another case is under study.

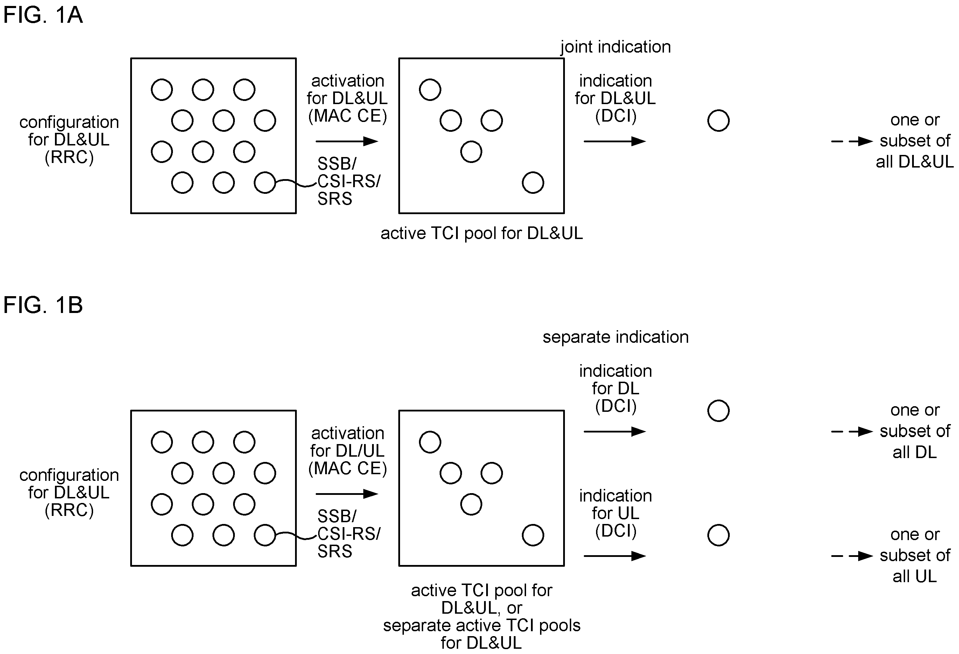

In the example in FIG. 1A, an RRC parameter (information element) configures multiple TCI states for both DL and UL. The MAC CE may activate multiple TCI states among the multiple configured TCI states. DCI may indicate one of the multiple activated TCI states. The DCI may be UL/DL DCI. The indicated TCI state may be applied to at least one (or all) of UL/DL channels/RSs. Single DCI may indicate both a UL TCI and a DL TCI.

In the example in FIG. 1A, one dot may be one TCI state applied to both UL and DL or may be two respective TCI states applied to UL and DL.

At least one of the multiple TCI states configured by the RRC parameter and the multiple TCI states activated by the MAC CE may be referred to as a TCI pool (common TCI pool, joint TCI pool, TCI state pool). The multiple TCI states activated by the MAC CE may be referred to as an active TCI pool (active common TCI pool).

Note that, in the present disclosure, a higher layer parameter (RRC parameter) that configures multiple TCI states may be referred to as configuration information that configures multiple TCI states or simply as "configuration information." In the present disclosure, one of multiple TCI states being indicated by using DCI may be receiving indication information indicating one of multiple TCI states included in DCI or may simply be receiving "indication information."

In the example in FIG. 1B, an RRC parameter configures multiple TCI states for both DL and UL (joint common TCI pool). A MAC CE may activate multiple TCI states (active TCI pool) among the multiple configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may indicate a UL TCI and a DL DCI separately.

In Rel. 17 NR (or later versions), it is assumed that beam activation/indication for TCI states associated with different physical cell identifiers (PCIs) is supported by a MAC CE / DCI. In Rel.18 NR (or later versions), it is assumed that indication of serving cell change for cells including different PCIs is supported by a MAC CE / DCI.

### {Physical Layer Procedure / Antenna Port QCL for Data}

To provide a reference signal for a PDSCH DMRS and PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If configuration of DLorJointTCIState or UL-TCIState (UL TCI State) is absent in a BWP in the CC, the UE can apply configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs / DL BWPs or a set of CCs / DL BWPs, if available. When a set of TCI state IDs is activated for the set of CCs / DL BWPs, and furthermore, for one of the CCs / DL BWPs, if available, the same set of TCI state IDs is applied to all the DL and/or UL BWPs in an indicated CC. Here, an applicable list of CCs is determined by the CC indicated in the activation command. The UE applies this indicated DLorJointTCIState and/or UL-TCIState to one of the CCs / DL BWPs or a set of CCs / DL BWPs if the activation command maps DLorJointTCIState and/or UL-TCIState to only one TCI codepoint, and applies this indicated DLorJointTCIState and/or UL-TCIState to one of the CCs / DL BWPs or a set of CCs / DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC / DL BWP to which the TCI state is applied.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) field is all '1's;
   - modulation and coding scheme (MCS) field is all '1's;
   - new data indicator (NDI) field is 0; and
   - frequency domain resource assignment (FDRA) field is all '0's for FDRA type 0, is all '1's for FDRA type 1, or is all '0's for dynamic switching (DynamicSwitch) (as with validation of a PDCCH with a DL semi-persistent scheduling (SPS) release or a UL grant type 2 scheduling release).

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

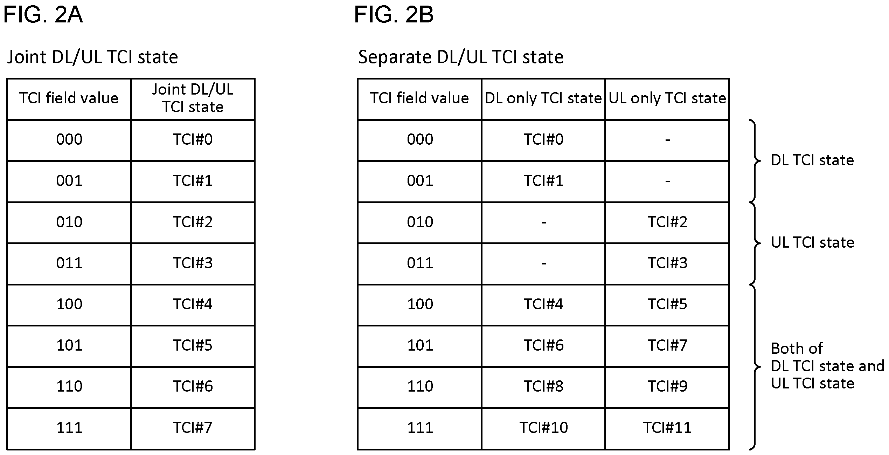

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State / Configured TCI State)

For a Rel-17 TCI state, a unified/common TCI state may mean a Rel-17 TCI state indicated by using DCI / MAC CE / RRC (of Rel. 17) (indicated Rel-17 TCI state).

In the present disclosure, an indicated Rel-17 TCI state, an indicated TCI state, a unified/common TCI state, a TCI state applied to multiple types of signals (channels/RSs), and a TCI state for multiple types of signals (channels/RSs) may be used interchangeably.

The indicated Rel-17 TCI state may be shared with at least one of UE-specific reception in a PDSCH/PDCC (updated by using DCI / MAC CE / RRC of Rel. 17), a dynamic grant (DCI) / configured grant PUSCH, and multiple (for example, all the) dedicated PUCCH resources. A TCI state indicated by DCI / MAC CE / RRC may be referred to as an indicated TCI state or a unified TCI state.

For the Rel-17 TCI state, a TCI state other than the unified TCI state may mean a Rel-17 TCI state configured by using a MAC CE / RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be used interchangeably.

The configured Rel-17 TCI state may not be shared with at least one of UE-specific reception in a PDSCH/PDCC (updated by using DCI / MAC CE / RRC of Rel. 17), a dynamic grant (DCI) / configured grant PUSCH, and multiple (for example, all the) dedicated PUCCH resources. The configured Rel-17 TCI state may be configured by RRC / MAC CE for each CORESET / each resource / each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state or a configured Rel-17 TCI state is to be applied to a non-UE-specific channel/signal, by using higher layer signaling (RRC signaling).

It is studied that an RRC parameter regarding a configured Rel-17 TCI state (TCI state ID) has the same configuration as that of an RRC parameter regarding a TCI state in Rel. 15/16. It is studied that the configured Rel-17 TCI state is configured/indicated for each CORESET / each resource / each resource set by using RRC / MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC / MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state regarding CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE / RACH signaling mechanism (legacy MAC CE / RACH signalling mechanism) may be used.

Note that a CSI-RS associated with a Rel-17 TCI state applied to CORESET #0 may be QCLed with an SSB associated with a PCI of a serving cell (physical cell ID) (in a manner similar to that of Rel. 15).

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel / resource / resource set follows an indicated Rel-17 TCI state may be configured by an RRC parameter. When the channel / resource / resource set is not configured to follow the indicated Rel-17 TCI state, a configured Rel-17 TCI state may be applied to the channel / resource / resource set.

### (Beam Application Time (BAT))

For DCI-based beam indication in Rel. 17, Studies 1 and 2 below are under study in relation to application time for indication of a beam / unified TCI state (beam application time (BAT)) .

### {Study 1}

It is studied that a first slot to which indicated TCI is applied is after at least Y symbols from a last symbol of an acknowledgement (ACK) for joint or separate DL/UL beam indication. It is studied that a first slot to which indicated TCI is applied is after at least Y symbols from a last symbol of an ACK / negative acknowledgement (NACK) for joint or separate DL/UL beam indication. The Y symbols may be configured by a base station, based on a UE capability reported by the UE. The UE capability may be reported in a symbol unit.

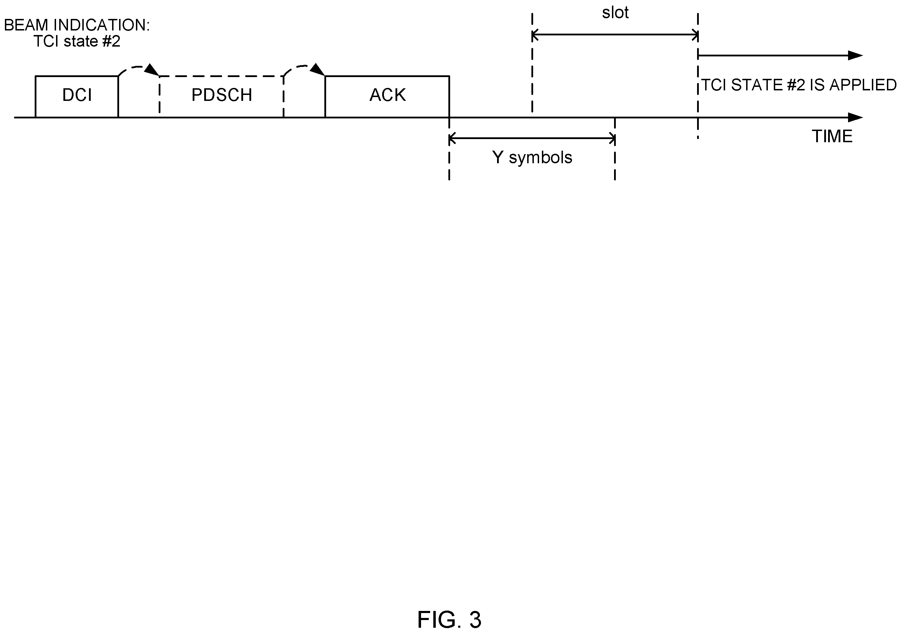

In an example in FIG. 3, the ACK may be an ACK for a PDSCH scheduled by beam indication DCI. In this example, the PDSCH may not be transmitted. The ACK in this case may be an ACK for the beam indication DCI.

For DCI-based beam indication in Rel. 17, it is studied that at least one Y symbol is configured for the UE for each BWP/CC.

When SCS varies between multiple CCs, a Y symbol value also varies, and thus there is a possibility that the application time varies between the multiple CCs.

### {Study 2}

For a case of CA, an application timing / BAT of the beam indication may follow one of Choices 1 to 3 below.
{Choice 1} Both of the first slot and Y symbols are determined on a carrier with the lowest SCS, from among one or more carriers to which the beam indication is applied.
{Choice 2} Both of the first slot and Y symbols are determined on a carrier with the lowest SCS, from among one or more carriers to which the beam indication is applied and a UL carrier that delivers the ACK.
{Choice 3} Both of the first slot and Y symbols are determined on a UL carrier that delivers the ACK.

It is studied that as a CC simultaneous beam update function of Rel. 17, a beam is common to multiple CCs in the CA. According to Study 2, the application time is common to the multiple CCs.

The application time (Y symbols) for the beam indication for the CA may be determined on a carrier with the lowest SCS, from among carriers to which the beam indication is applied. MAC CE-based beam indication in Rel. 17 (when only a single TCI codepoint is activated) may follow a Rel-16 application timeline for MAC CE activation.

Based on these studies, it is studied that the following operation is defined in a specification.

### {Operation}

When the UE transmits a last symbol of a PUCCH with HARQ-ACK information corresponding to DCI for communicating TCI state indication, application of an indicated TCI state with a Rel-17 TCI state may be started at a first slot after at least Y symbols from the last symbol of the PUCCH. Y may be a higher layer parameter (for example, BeamAppTime_r17 [symbol]). Both of the first slot and Y symbols may be determined on a carrier with the lowest SCS, from among carriers to which the beam indication is applied. At a certain timing, the UE may assume one indicated TCI state with a Rel-17 TCI state for DL and UL, or may assume one indicated TCI state with a Rel-17 TCI state for UL (separately from DL).

In place of Y [symbol], X [ms] may be used.

For the application time, it is studied that the UE reports at least one of UE Capabilities 1 and 2 below.

### {UE Capability 1}

Minimum application time for each SCS (minimum value of Y symbols between a last symbol of a PUCCH that delivers an ACK and a first slot to which a beam is applied).

### {UE Capability 2}

A minimum time gap between a last symbol of a beam indication PDCCH (DCI) and a first slot to which a beam is applied. A gap between the last symbol of the beam indication PDCCH (DCI) and the first slot to which the beam is applied may satisfy the UE capability (minimum time gap).

UE Capability 2 may be an existing UE capability (for example, timeDurationForQCL).

A relationship between indication of a beam and a channel/RS to which the beam is applied may satisfy at least one of UE Capabilities 1 and 2.

For the application time, it is conceivable that a parameter (for example, BeamAppTime_r17) configured by the base station is an optional field.

### (Intra-cell/Inter-cell Beam Indication/Management)

In Rel-17 NR (or later versions), it is assumed that beam indication for TCI states associated with different PCIs is supported by a MAC CE / DCI. In Rel-18 NR (or later versions), it is assumed that indication of serving cell change for cells having different PCIs is supported by a MAC CE / DCI.

The indicated Rel-17 TCI state may be shared with (applied to) a UE-dedicated channel/RS and a non-UE-dedicated channel/RS, in a cell.

The indicated Rel-17 TCI state may be shared with (applied to) only a UE-dedicated channel/RS, in cells.

In the cells, whether non-UE-dedicated channels/RSs follow an indicated Rel-17 TCI state for each PDSCH (PDSCH configuration) / each CORESET (CORESET configuration) may be configured by an RRC parameter. The UE-dedicated channel/RS may not follow the RRC parameter, and may always follow the indicated Rel-17 TCI state.

In the present disclosure, a non-UE-dedicated CORESET may mean a CORESET with a CSS, and a UE-dedicated CORESET may mean a CORESET with a USS. In the present disclosure, a non-UE-dedicated PDSCH may mean a PDSCH scheduled by a CORESET with a CSS, or may mean a PDSCH scheduled by a CORESET with a CSS other than a type 3 CSS. In the present disclosure, a UE-dedicated PDSCH may mean a PDSCH scheduled by a CORESET with a USS, or may mean a PDSCH scheduled by a CORESET with a USS or a type 3 CSS. For example, whether to follow the indicated Rel-17 TCI state may be configured by an RRC parameter (for example, followUnifiedTCIstate) for each PDSCH configuration (PDSCH-Config), and this configuration may not be applied to a UE-dedicated PDSCH (the UE-dedicated PDSCH always follows a Rel-17 TCI state) and may be applied to a non-UE-dedicated PDSCH.

### (Default QCL Assumption for PDSCH)

In the present disclosure, a QCL type D property, a QCL parameter, an RS regarding a QCL parameter, 'QCL-TypeD,' qcl-Type set to 'typeD,' an RS in a TCI state regarding a QCL type D parameter, a source RS in a TCI state regarding a QCL type D parameter, and an RS used to refer to QCL type D may be used interchangeably.

In the present disclosure, a QCL assumption applied to a PDSCH when offset (time offset, scheduling offset) between reception of scheduling DCI for the PDSCH and reception of the PDSCH is smaller than a threshold "timeDurationForQCL," a default QCL assumption, and a default beam may be used interchangeably.

### {Physical Layer Procedure / Antenna Port QCL for Data}

Irrespective of tci-PresentInDCI and tci-PresentInDCI-1-2 (configuration of the presence of a TCI field in DCI) in an RRC connected mode, if offset between reception of DL DCI (scheduling DCI for a PDSCH) and a PDSCH corresponding to the DCI (PDSCH scheduled by the DCI) is smaller than a threshold "timeDurationForQCL," and at least one configured TCI state for a serving cell with the scheduled PDSCH includes qcl-Type (QCL type) set to 'typeD' (type D), the UE follows PDSCH Operations 1 to 5 below.

### > PDSCH Operation 1 (case of single-TRP transmission)

The UE assumes that a DMRS port for the PDSCH of the serving cell is QCLed with RS(s) regarding a QCL parameter used to indicate PDCCH quasi co-location (QCL) on a CORESET with lowest controlResourceSetId (CORESET-ID) in the latest slot in which one or more CORESETs in an active BWP of the serving cell are monitored by the UE, the CORESET being associated with a monitored search space. In this case, if a "QCL type D property of a PDSCH DMRS is different from a QCL type D property of a PDCCH DMRS that overlaps the PDSCH DMRS in at least one symbol, the UE assumes that reception of a PDCCH associated with the CORESET is prioritized. This is also applied to a case of intra-band CA (case where the PDSCH and the CORESET are present in different respective component carriers).

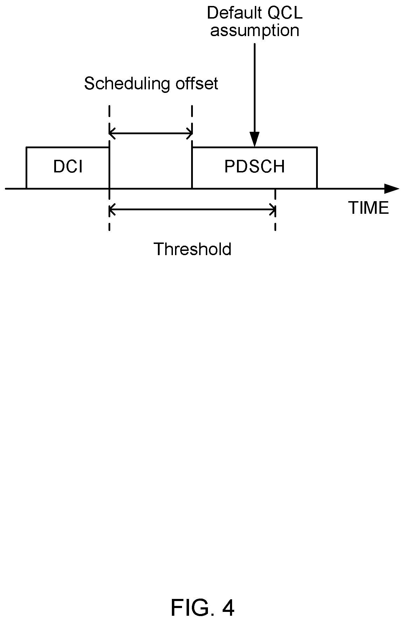

As shown in an example in FIG. 4, a default QCL assumption for the PDSCH in this case is RS(s) regarding a QCL parameter used to indicate PDCCH QCL on a CORESET with lowest controlResourceSetId in the latest slot in which one or more CORESETs in an active BWP of the serving cell are monitored by the UE, the CORESET being associated with a monitored search space.

### > PDSCH Operation 2 (case of multi-DCI-based multi-TRP transmission)

If the UE is configured with enableDefaultTCIStatePerCoresetPoolIndex, and the UE is configured by a higher layer parameter "PDCCH-Config" including two different values of coresetPoolIndex in different ControlResourceSets, the UE follows Operation 2-1 below.

### >> PDSCH Operation 2-1

The UE assumes that a DMRS port for the PDSCH of the serving cell associated with a value of coresetPoolIndex is QCLed with RS(s) regarding a QCL parameter used to indicate PDCCH QCL on a CORESET with lowest controlResourceSetId, from among multiple CORESETs in the latest slot in which one or more CORESETs associated with the same value as a value of coresetPoolIndex of a PDCCH for scheduling the PDSCH in an active BWP of the serving cell are monitored by the UE, the CORESET being associated with a monitored search space. The multipleCORESETs are configured with the same value as the value of coresetPoolIndex of the PDCCH for scheduling the PDSCH. In this case, if a QCL type D property of a PDSCH DMRS is different from a QCL type D property of a PDCCH DMRS that overlaps the PDSCH DMRS in at least one symbol, and the PDSCH DMRS and the PDCCH DMRS are associated with the same value of coresetPoolIndex, the UE assumes that reception of a PDCCH associated with the CORESET is prioritized. This is also applied to a case of intra-band CA (case where the PDSCH and the CORESET are present in different respective component carriers).

### > PDSCH Operation 3 (case of single-DCI-based multi-TRP transmission)

If the UE is configured with enableTwoDefaultTCI-States, and at least one TCI codepoint indicates two TCI states, the UE assumes that a DMRS port or a PDSCH transmission occasion for the PDSCH of the serving cell is QCLed with RS(s) regarding a QCL parameter associated with a TCI state corresponding to the lowest codepoint of multiple TCI codepoints including two different TCI states. When the UE is configured by a higher layer parameter "repetitionScheme" set to 'tdmchemeA' or the UE is configured with a higher layer parameter "repetitionNumber," and offset between reception of DL DCI and the first PDSCH transmission occasion is smaller than a threshold "timeDurationForQCL," mapping from the TCI state to the PDSCH transmission occasion is determined by replacing the indicated TCI states with multiple TCI states corresponding to the lowest codepoint of the multiple TCI codepoints including two different TCI states, based on an activated TCI state in a slot with the first PDSCH transmission occasion. In this case, if a QCL type D property in both of the multiple TCI states corresponding to the lowest codepoint of the multiple TCI codepoints including two different TCI states is different from a QCL type D property of a PDCCH DMRS that overlaps the PDSCH transmission occasion in at least one symbol, the UE assumes that reception of a PDCCH associated with the CORESET is prioritized. This is also applied to a case of intra-band CA (case where the PDSCH and the CORESET are present in different respective component carriers).

### > PDSCH Operation 4 (case of an SFN-PDCCH and single-TRP transmission)

If the UE is not configured with sfnSchemePdsch, the UE is configured with sfnSchemePdcch set to 'sfnSchemeA' (sfnScheme-r17 in PDCCH-Config), a TCI codepoint with two TCI states in an activation command is absent, and a CORESET with the lowest ID in the latest slot is indicated with two TCI states, the UE assumes that a DMRS port for the PDSCH of the serving cell is QCLed with RS(s) regarding a QCL parameter associated with the first TCI state of two TCI states indicated for the CORESET.

### > PDSCH Operation 5 (case of cross-carrier scheduling)

In all the above-described cases (Operations 1 to 4), if none of the configured TCI states for the serving cell with the scheduled PDSCH is configured with qcl-Type set to 'typeD,' the UE acquires another QCL assumption, irrespective of time offset between reception of the DL DCI and the PDSCH corresponding to the DCI, based on a TCI state indicated for the scheduled PDSCH.

### {RRC Protocol Specification / RRC IE / SFN Scheme}

sfnSchemePdsch is a parameter used to configure a single frequency network (SFN) scheme for the PDSCH, and is sfnSchemeA or sfnSchemeB. sfnSchemePdsch can be configured only for only a BWP. sfnScheme-r17 is a parameter used to configure an SFN scheme for the PDCCH, and indicates scheme 1 (sfnSchemeA) or TRP-based pre-compensation (sfnSchemeB). PDCCH-Config in all the BWPs (excluding BWP #0) in one serving cell each includes the same configuration of the SFN scheme.

### (QCL assumption for A-CSI)

### {Physical Layer Procedure / CSI Reporting and CSI-RS Triggering · Activation for Data}

### {A-CSI Reporting · A-CSI-RS when Triggering PDCCH and CSI-RS Include Same Numerologies}

In the present disclosure, a threshold, beamSwitchTiming, 48, beamSwitchTiming-r16, a value reported by the UE, and capability information may be used interchangeably.

In the present disclosure, a QCL assumption applied to an A-CSI-RS when offset (time offset, scheduling offset) between a last symbol of a PDCCH that delivers triggering DCI for the A-CSI-RS and a first symbol of an A-CSI-RS resource is smaller than a threshold, a default QCL assumption, and a default beam may be used interchangeably.

µ_CSIRS is SCS configuration for the A-CSI-RS, and may be the same as SCS configuration for the PDCCH.

A trigger state is started by using a CSI request field in the DCI. The UE follows A-CSI Operations 1 to 4 below.

### > A-CSI Operation 1

When all the bits of the CSI request field in the DCI are set to zero, no CSI is requested.

### > A-CSI Operation 2

When the number of CSI triggering states configured in CSI-AperiodicTriggerStateList is greater than 2^{N_TS}-1, the UE receives a sub-selection indication used to map 2^{N_TS}-1 trigger states to multiple codepoints of the CSI request field in the DCI. Here, N_TS is the number of bits in the CSI request field of the DCI. N_TS is configured by a higher layer parameter "reportTriggerSize," and N_TS ∈ {0, 1, 2, 3, 4, 5, 6}. When the UE attempts to transmit a PUCCH with HARQ-ACK information in slot n corresponding to a PDSCH that delivers the sub-selection indication, application of operation corresponding to the transmission and UE assumption regarding mapping from a selected CSI trigger state to a codepoint of the CSI request field of the DCI is started at a first slot after slot n+3·Nₛₗₒₜ^{subframe,µ}+2^{µ}/2^{µ_K_mac}·K_mac. Here, µ is SCS configuration for the PUCCH, and µ_K_mac is SCS configuration for K_mac with a value of 0 for frequency range 1. When K_mac is provided by K-Mac or if K-Mac is not provided, K_mac = 0. Nₛₗₒₜ^{subframe,µ} is the number of slots in one subframe for µ.

### > A-CSI Operation 3

When the number of CSI triggering states configured in CSI-AperiodicTriggerStateList is less than or equal to 2^{N_TS}-1, the CSI request field in the DCI directly indicates the triggering state.

### > A-CSI Operation 4

For each A-CSI-RS resource in a CSI-RS resource set associated with each CSI triggering state, via higher layer signaling of qcl-Info including a list of references of TCI-State for an A-CSI-RS resource associated with a CSI triggering state, QCL configuration and a QCL type for a QCL source associated with the CSI triggering state are indicated for the UE. If State referring to the list is configured with reference to an RS configured with qcl-Type set to 'typeD,' the RS may be SS/PBCH blocks located in the same CC / DL BWP or different CCs / DL BWPs, or CSI-RS resources located in the same CC / DL BWP or different CCs / DL BWPs and configured as periodic or semi-persistent. The UE follows A-CSI Operation 4-1 below.

### >> A-CSI Operation 4-1

When scheduling offset between the last symbol of the PDCCH that delivers the triggering DCI and the first symbol of the A-CSI-RS resource in NZP-CSI-RS-ResourceSet configured without a higher layer parameter "trs-Info" (tracking RS information) is one of Cases 1 to 3 below, the UE follows A-CSI Operations 4-1-1 to 4-1-6 below.

### - Case 1

A case where when a threshold "beamSwitchTiming" (beam switch timing) reported by the UE is one of values {14, 28, 48}·2^{max(0,µ_CSIRS-3)}, and enableBeamSwitchTiming (information element for enabling beam switch timing) is not provided, the scheduling offset is smaller than the threshold "beamSwitchTiming."

### - Case 2

A case where when the UE provides/reports beamSwitchTiming-r16 (Rel-16 beam switch timing), enableBeamSwitchTiming is provided, and NZP-CSI-RS-ResourceSet is configured with a higher layer parameter "repetition" (repetition information element) set to 'off' or without a higher layer parameter "repetition," the scheduling offset is less than 48·2^{max(0,µ_CSIRS-3)}.

### - Case 3

A case where when enableBeamSwitchTiming is provided, and NZP-CSI-RS-ResourceSet is configured with the higher layer parameter "repetition" set to 'on,' the scheduling offset is less than beamSwitchTiming-r16 reported by the UE.

### >>> A-CSI Operation 4-1-1 (case of multi-DCI-based multi-TRP transmission)

When the UE is configured with enableDefaultTCIStatePerCoresetPoolIndex (information element for enabling a default TCI state per CORESET pool index), and the UE is configured by a higher layer parameter "PDCCH-Config" (PDCCH configuration) including two different values of CORESET pool indices in ControlResourceSet (CORESET information element), the UE follows A-CSI Operations 4-1-1-1 to 4-1-1-2 below.

### >>>> A-CSI Operation 4-1-1-1

When any another DL signal using an indicated TCI state is present in the same symbol as that for the CSI-RS, the UE applies a QCL assumption for the DL signal when receiving the A-CSI-RS. The DL signal indicates one of the following DL signals.
- PDSCH scheduled by PDCCH associated with same CORESET pool index as that of PDCCH that triggers this A-CSI-RS, and scheduled with offset greater than or equal to threshold "timeDurationForQCL"
- When reported value of beamSwitchTiming is one of values {14, 28, 48}·2^{max(0,µ_CSIRS-3)}, and enableBeamSwitchTiming is not provided, A-CSI-RS triggered by PDCCH associated with same coresetPoolIndex as that of PDCCH that triggers this A-CSI-RS, and scheduled with offset greater than or equal to beamSwitchTiming reported by UE
- When reported value of beamSwitchTiming-r16 is one of values {224, 336}·2^{max(0,µ_CSIRS-3)}, and enableBeamSwitchTiming is provided, A-CSI-RS triggered by PDCCH associated with same coresetPoolIndex as that of PDCCH that triggers this A-CSI-RS, and scheduled with offset greater than or equal to 48·2^{max(0,µ_CSIRS-3)}
- P-CSI-RS
- SP-CSI-RS

### >>>> A-CSI Operation 4-1-1-2

When the DL signal is absent, the UE applies, when receiving the A-CSI-RS, a QCL assumption used for a CORESET including lowest controlResourceSetId (CORESET ID), from among CORESETs configured with a value of the same CORESET pool index as that of the PDCCH that triggers the A-CSI-RS in the latest slot in which one or more CORESETs are associated with the value of the same CORESET pool index as that of the PDCCH that triggers the A-CSI-RS, the CORESET being associated with a monitored search space.

### >>> A-CSI Operation 4-1-2 (case of single-DCI-based multi-TRP transmission)

In a case other than the case of A-CSI Operation 4-1-1, if the UE is configured with enableTwoDefaultTCIStates (information element for enabling two default TCI states), and at least one TCI codepoint (codepoint of a TCI field) is mapped to two TCI states, the UE follows A-CSI Operations 4-1-2-1 to 4-1-2-2 below.

### >>>> A-CSI Operation 4-1-2-1

If any another DL signal with an indicated TCI state is present in the same symbol as that for the CSI-RS, the UE applies a QCL assumption for the DL signal when receiving the A-CSI-RS. The DL signal indicates one of the following DL signals.
- PDSCH scheduled with offset greater than or equal to threshold "timeDurationForQCL"
- A-CSI-RS scheduled with offset greater than or equal to beamSwitchTiming reported by UE, in case where reported value of beamSwitchTiming is one of values {14, 28, 48}·2^{max(0,µ_CSIRS-3)} and where enableBeamSwitchTiming is not provided
- A-CSI-RS scheduled with offset greater than or equal to 48·2^{max(0,µ_CSIRS-3)}, in case where reported value of beamSwitchTiming-r16 is one of values {224, 336}·2^{max(0,µ_CSIRS-3)} and where enableBeamSwitchTiming is provided
- P-CSI-RS
- SP-CSI-RS

If a PDSCH indicated with two TCI states is present in the same symbol as that for the CSI-RS, the UE applies a first TCI state of the two TCI states when receiving the A-CSI-RS.

### >>>> A-CSI Operation 4-1-2-2

When the DL signal is absent, the UE applies, when receiving the A-CSI-RS, a first TCI state of two TCI states corresponding to the lowest TCI codepoint of TCI codepoints mapped to two TCI states, the TCI codepoints being applicable to a PDSCH in an active BWP of a cell in which the CSI-RS is to be received.

### >>> A-CSI Operation 4-1-3 (case of an SFN-PDCCH and single-TRP transmission)

In a case other than the cases of A-CSI Operations 4-1-1 to 4-1-2, if the UE is configured with sfnSchemePdcch set to 'sfnSchemeA' (sfnScheme-r17 in PDCCH-Config), and two TCI states are activated for the CORESET by an activation command, the UE follows A-CSI Operations 4-1-3-1 to 4-1-3-2 below.

### >>>> A-CSI Operation 4-1-3-1

If any another DL signal with an indicated TCI state is present in the same symbol as that for the CSI-RS, the UE applies a QCL assumption for the DL signal when receiving the A-CSI-RS. The DL signal indicates one of the following DL signals.
- PDSCH scheduled with offset greater than or equal to threshold "timeDurationForQCL"
- P-CSI-RS
- SP-CSI-RS
- A-CSI-RS in NZP-CSI-RS resource set scheduled with offset greater than or equal to beamSwitchTiming reported by UE in case where reported value of beamSwitchTiming is one of values {14, 28, 48}·2^{max(0,µ_CSIPS-3)} and where enableBeamSwitchTiming is not provided or this NZP-CSI-RS resource set is configured with higher layer parameter "trs-Info"
- A-CSI-RS scheduled with offset greater than or equal to 48·2^{max(0,µ_CSIRS-3)}, in NZP-CSI-RS resource set configured with higher layer parameter "repetition" set to 'off' or in NZP-CSI-RS resource set configured without higher layer parameters "trs-Info" and "repetition," in case where UE is provided with beamSwitchTiming-r16 and is provided with enableBeamSwitchTiming
- A-CSI-RS scheduled with offset greater than or equal to beamSwitchTiming-r16 reported by UE, in NZP-CSI-RS resource set configured with higher layer parameter "repetition" set to 'on,' in case where enableBeamSwitchTiming is provided

### >>>> A-CSI Operation 4-1-3-2

When the DL signal is absent, the UE applies, when receiving the A-CSI-RS, a first TCI state of two TCI states indicated for a CORESET with the lowest CORESET ID in the latest slot in an active BWP of a cell in which the CSI-RS is to be received.

### >>> A-CSI Operation 4-1-4 (case where a DL signal is present in single-TRP transmission)

In a case other than the cases of A-CSI Operations 4-1-1 to 4-1-3, if any another DL signal with an indicated TCI state is present in the same symbol as that for the CSI-RS, the UE applies a QCL assumption for the DL signal when receiving the A-CSI-RS. The DL signal indicates one of the following DL signals.
- PDSCH scheduled with offset greater than or equal to threshold "timeDurationForQCL"
- P-CSI-RS
- SP-CSI-RS
- A-CSI-RS in NZP-CSI-RS resource set scheduled with offset greater than or equal to beamSwitchTiming reported by UE in case where reported value of beamSwitchTiming is one of values {14, 28, 48} and where enableBeamSwitchTiming is not provided or this NZP-CSI-RS resource set is configured with higher layer parameter "trs-Info"
- A-CSI-RS scheduled with offset greater than or equal to 48, in NZP-CSI-RS resource set configured with higher layer parameter "repetition" set to 'off' or in NZP-CSI-RS resource set configured without higher layer parameters "trs-Info" and "repetition," in case where UE is provided with beamSwitchTiming-r16 and is provided with enableBeamSwitchTiming
- A-CSI-RS scheduled with offset greater than or equal to beamSwitchTiming-r16 reported by UE, in NZP-CSI-RS resource set configured with higher layer parameter "repetition" set to 'on,' in case where enableBeamSwitchTiming is provided

### >>> A-CSI Operation 4-1-5 (case where a DL signal is absent in single-TRP transmission)

In a case other than the cases of A-CSI Operations 4-1-1 to 4-1-4, if at least one CORESET is configured for a BWP in which the A-CSI-RS is received, the UE applies, when receiving the A-CSI-RS, a QCL assumption used for a CORESET with lowest controlResourceSetId in the latest slot in which one or more CORESETs in an active BWP of the serving cell are monitored, the CORESET being associated with a monitored search space.

### >>> A-CSI Operation 4-1-6 (case of cross-carrier scheduling)

In a case other than the cases of A-CSI Operations 4-1-1 to 4-1-5, if the UE is configured with enableDefaultBeamForCCS (information element for enabling a default beam for cross-carrier scheduling), the UE applies, when receiving the A-CSI-RS, a QCL assumption for an activated TCI state with the lowest ID applicable to a PDSCH in an active BWP of a cell in which the CSI-RS is to be received.

### (QCL Assumption for PDCCH)

### {Physical Layer Procedure for Control / UE Procedure for Determination of Physical Downlink Control Channel Allocation}

In a CORESET with index 0 (CORESET 0), the UE follows CORESET 0 Operations 1 to 2 below.

### > CORESET 0 Operation 1

If the UE is provided with DLorJoint-TCIState, and followUnifiedTCIstate for the CORESET = 'enabled,' the UE assumes that a DMRS antenna port for PDCCH reception in the CORESET and a DMRS antenna port for PDSCH reception scheduled by a DCI format provided by the PDCCH reception in the CORESET are QCLed with a reference signal provided by indicated DLorJoint-TCIState.

### > CORESET 0 Operation 2

In a case other than the case of CORESET 0 Operation 1, the UE assumes that the DMRS antenna port for the PDCCH reception in the CORESET is QCLed with one of DL RSs 1 to 2 below.

### >> DL RS 1

If a TCI state indicated by a MAC CE activation command for the CORESET is present, one or more DL RSs configured by the TCI state.

### >> DL RS 2

When a MAC CE activation command for indicating a TCI state for the CORESET has not been received after the latest random access procedure not initiated by a PDCCH order for triggering non-contention random access (contention-free random access, CFRA) procedure, an SS/PBCH block identified by the UE during the latest random access procedure. Alternatively, an SS/PBCH block identified by the UE during the latest transmission of a configured grant PUSCH.

In a CORESET other than the CORESET with index 0, if one TCI state is applied to a certain CORESET for the UE or if the UE receives a MAC CE activation command for one or two of TCI states provided for the certain CORESET, the UE assumes that a DMRS antenna port for PDCCH reception in the CORESET is QCLed with one or more DL RSs configured by the TCI state. In the CORESET with index 0, the UE assumes that one CSI-RS configured with qcl-Type set to 'typeD' in one TCI state indicated by a MAC CE activation command for the CORESET is provided by one SS/PBCH block.

If the UE receives a MAC CE activation command for one of the plurality of TCI states, the UE applies the activation command in a first slot after slot k+3·Nₛₗₒₜ^{subframe,µ}+2^{µ}·K_mac. Here, k is a slot in which the UE attempts to transmit a PUCCH with HARQ-ACK information for a PDSCH for providing the activation command. µ is SCS configuration for a PUCCH in the slot in which the activation command is applied. K_mac is the number of slots for SCS configuration µ = 0 and is provided by K-Mac, or K_mac = 0 if K-Mac is not provided. Nₛₗₒₜ^{subframe,µ} is the number of slots in one subframe for µ.

If the UE is provided with DLorJoint-TCIState, a DMRS antenna port for PDCCH reception in a CORESET other than the CORESET with index 0 associated with only a USS set and/or a type 3-PDCCH CSS set and a DMRS antenna port for PDSCH reception scheduled by a DCI format provided by PDCCH reception in the CORESET are QCLed with a reference signal provided by indicated DLorJoint-TCIState.

If the UE is provided with DLorJoint-TCIState for a CORESET other than the CORESET with index 0 associated with at least a CSS set other than a type 3-PDCCH CSS set and if followUnifiedTCIstate is set to 'enabled,' a DMRS antenna port for PDCCH reception in a CORESET other than the CORESET and a DMRS antenna port for PDSCH reception scheduled by a DCI format provided by PDCCH reception in the CORESET are QCLed with a reference signal provided by indicated DLorJoint-TCIState.

### (Channel/RS to Which Indicated TCI State Is Applied)

An indicated TCI state with a MAC CE / DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook / non-codebook / antenna switching use, the indicated TCI state is applied to the SRS resource set. A configured TCI state in the SRS resource set is applied to another SRS.

It is studied that if scheduling offset is smaller than a threshold (timeDurationForQCL), the UE follows Default QCL Assumption Operations 1 and 2 below irrespective of configuration of followUnifiedTCIState.

### > Default QCL Assumption Operation 1

If the indicated TCI state is associated with a PCI different from a PCI of a serving cell (that is, inter-cell), the UE may follow Default QCL Assumption Operations 1-1 and 1-2 below.

### >> Default QCL Assumption Operation 1-1

The UE applies a default QCL assumption of Rel. 15 (that is, a QCL assumption for the lowest CORESET ID in the latest slot) to both non-UE-dedicated and UE-dedicated PDSCHs.

### >> Default QCL Assumption Operation 1-2

If QCL type D properties for multiple default beams in a certain slot are different from each other in multiple CCs in a band, a default beam for a CC with the lowest ID is prioritized. In other words, the default beam for the CC with the lowest ID is applied to all the CCs in the band.

### > Default QCL Assumption Operation 2

If the indicated TCI state is associated with a PCI of a serving cell (that is, intra-cell), the UE always applies the indicated TCI state to both non-UE-dedicated and UE-dedicated PDSCHs.

A similar approach may be applied to a default beam for the A-CSI-RS.

It is studied that when a source RS with a TCI state of a non-UE-dedicated PDSCH is not associated with a PCI of a serving cell , the UE does not assume that the PDSCH is not received. When the indicated TCI state is associated with a PCI of a non-serving cell, a non-UE-dedicated PDSCH may be received by using a TCI state corresponding to the PCI of the non-serving cell, in accordance with a default QCL assumption of Rel. 15.

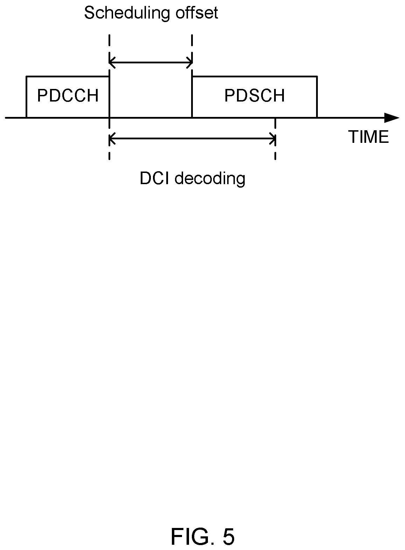

In an example in FIG. 5, during a period from reception of DCI for scheduling the non-UE-dedicated PDSCH until completion of decoding of the DCI (period until a lapse of timeDurationForQCL from the reception of the DCI), the UE fails to recognize whether the DCI is UE-dedicated. When a time period from the reception of the DCI until reception of the PDSCH is shorter than timeDurationForQCL, the UE fails to determine a QCL assumption for the PDSCH, and thus operation of buffering a received signal by using multiple QCL assumptions simultaneously is conceivable. It is difficult for the UE that supports only a single TRP to support this operation.

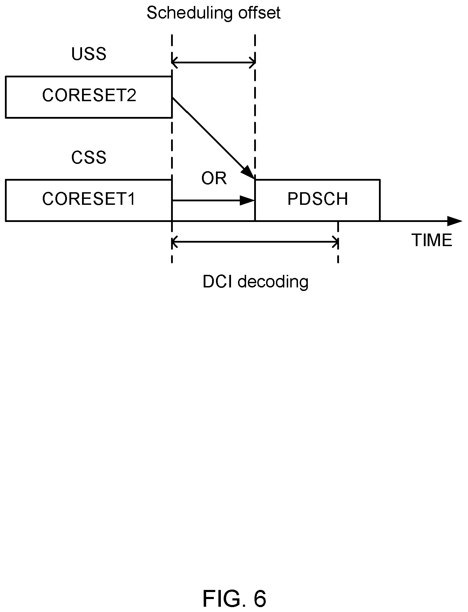

In an example in FIG. 6, CORESET 1 is associated with a CSS other than a type 3-PDCCH CSS, CORESET 2 is associated with a USS, and followUnifiedTCIState is not configured for CORESETs 1 and 2. A PDSCH is scheduled by DCI in CORESET 1 or 2, and a time period from the DCI until the PDSCH is shorter than timeDurationForQCL. During a period from reception of the DCI until completion of decoding of the DCI, the UE fails to recognize whether the PDSCH is scheduled by using CORESET 1 or CORESET 2 (whether the PDSCH is a non-UE-dedicated PDSCH or a UE-dedicated PDSCH).

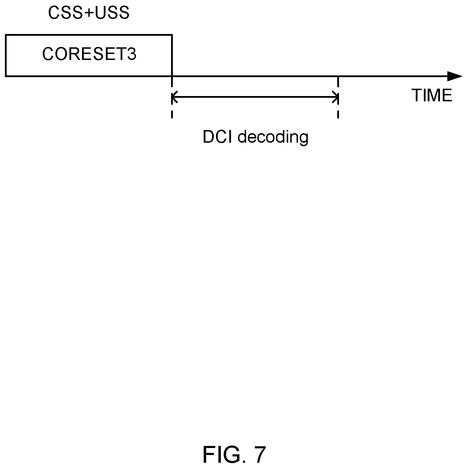

In an example in FIG. 7, CORESET 3 is associated with a CSS other than a type 3-PDCCH CSS, and a USS, and followUnifiedTCIState is not configured for CORESET 1. During a period from reception of DCI in CORESET 3 until completion of decoding of the DCI, the UE fails to recognize whether the PDSCH is scheduled by using the CSS or the USS (whether the PDSCH is a non-UE-dedicated PDSCH or a UE-dedicated PDSCH).

It is conceivable that when an A-CSI-RS is received before completion of decoding of the DCI, a rule similar to the default QCL assumption for PDSCH is used. However, as described above, when another DL signal is present in the same symbol as that for the A-CSI-RS, the A-CSI-RS is received by using a QCL assumption for the DL signal. The UE can perform this operation when recognizing beforehand that another DL signal is present in the same symbol as that for the A-CSI-RS. When another DL signal is absent in the same symbol, the UE does not recognize whether the A-CSI-RS or the PDSCH is to be received, and thus it is conceivable that a received signal is buffered by using a common default QCL assumption.

Therefore, unless such operation for determination of a QCL assumption is definite, degradation in communication quality, throughput reduction, and the like may occur.

Thus, the inventors of the present invention came up with the idea of a method for determining a QCL assumption.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be used interchangeably. In the present disclosure, "A/B/C" may mean "at least one of A, B, and C."

In the present disclosure, activate, deactivate, indicate, select, configure, update, determine, and the like may be used interchangeably. In the present disclosure, "support," "control," "controllable," "operate," "operable," and the like may be used interchangeably.

In the present disclosure, radio resource control (RRC), an RRC parameter, an RRC message, a higher layer parameter, a field, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be used interchangeably. In the present disclosure, a sequence, a list, a set, a group, a cluster, a subset, and the like may be used interchangeably.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), a QCL assumption, a reference signal for QCL, a UL transmission (TX) spatial filter, and the like may be used interchangeably.

A spatial relation information Identifier (ID) (TCI state ID) and spatial relation information (TCI state) may be used interchangeably. "Spatial relation information" may be used interchangeably with "a set of spatial relation information", "single or multiple spatial relation information", and the like. The TCI state and the TCI may be used interchangeably.

In the present disclosure, description "Rel. XX" represents 3GPP release. Note, however, that the release number "XX " is an example, and may be replaced with another number.

In the present disclosure, a search space and a search space set may be used interchangeably. In the present disclosure, a type xCSS, a type x-PDCCH CSS, and a type x-PDCCH CSS set may be used interchangeably.

In the present disclosure, a quasi co-location (QCL) assumption for a PDSCH DMRS port, an RS QCLed (quasi co-located) with a PDSCH DMRS port, and a QCL assumption / TCI state for a PDSCH may be used interchangeably. In the present disclosure, a QCL assumption applied to an A-CSI-RS, an RS QCLed with an A-CSI-RS, and a QCL assumption / TCI state for an A-CSI-RS may be used interchangeably.

### (Radio Communication Method)

In each embodiment, a UE-dedicated PDSCH and a PDSCH scheduled by DCI in a USS or in a type 3 CSS may be used interchangeably. In each embodiment, a non-UE-dedicated PDSCH and a PDSCH scheduled by DCI in a CSS other than a type 3 CSS may be used interchangeably.

In each embodiment, a PCI different from a PCI of a serving cell , a non-serving cell PCI, and a non-serving cell may be used interchangeably.

A UE may receive information (DLorJoint-TCIState / TCI state indication) regarding a TCI state (unified TCI state / indicated TCI state) for multiple types of signals. When a time offset between DCI and a downlink signal (PDSCH/A-CSI-RS) indicated by the DCI is smaller than a threshold, and the TCI state is associated with a PCI different from a PCI of a serving cell , the UE may determine a QCL assumption for the downlink signal.

### <Embodiment #1>

This embodiment relates to a default QCL assumption for PDSCH.

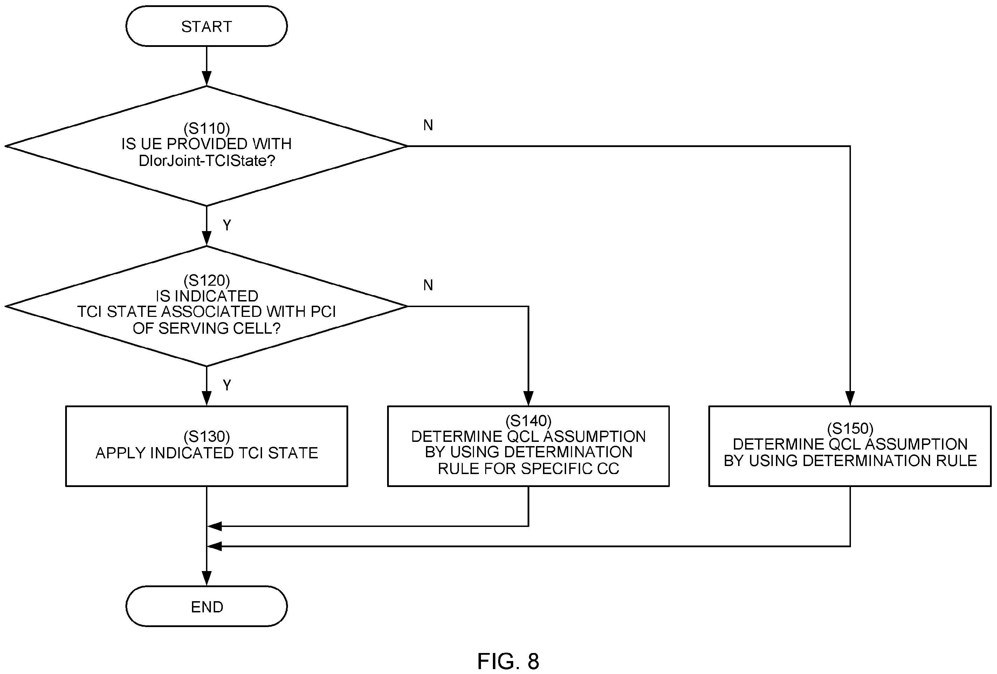

When a scheduling offset between reception of DCI and reception of a PDSCH scheduled by the DCI is smaller than a threshold, and a configured TCI state includes QCL type D, a UE may perform a determination operation for default QCL assumption in such a manner as that described in an example in FIG. 8. In S110, the UE judges whether DLorJoint-TCIState is provided. When the UE is not provided with DLorJoint-TCIState (S110: N), in S150, the UE determines a QCL assumption for the PDSCH by using a determination rule. In a manner similar to that of PDSCH Operation 1 described above, the determination rule may determine, as the QCL assumption, RS(s) regarding a QCL parameter used to indicate PDCCH QCL on a CORESET with lowest controlResourceSetId in the latest slot in which one or more CORESETs in an active BWP of the serving cell are monitored by the UE, the CORESET being associated with a monitored search space.

When the UE is provided with DLorJoint-TCIState (S110: Y), in S120, the UE judges whether an indicated TCI state is associated with a PCI of the serving cell. When the indicated TCI state is associated with the PCI of the serving cell (S120: Y), in S130, the indicated TCI state is applied to the PDSCH. When the indicated TCI state is not associated with the PCI of the serving cell (S120: N), in S140, the UE determines a QCL assumption for the PDSCH by using a determination rule for a specific CC. If QCL type D properties for multiple CORESETs in a certain slot are different from each other in multiple CCs in the band, the specific CC may be a CC with the lowest ID. When the QCL type D properties for the multiple CORESETs in the certain slot are identical to each other in the multiple CCs in the band, the specific CC may be any CC in the band, a serving cell, a non-serving cell, or a CC with the lowest ID.

### <<Embodiment #1-1>>

### {Physical Layer Procedure / Antenna Port QCL for Data}

Irrespective of tci-PresentInDCI and tci-PresentInDCI-1-2 in an RRC connected mode, if the UE is not provided with DLorJoint-TCIState, offset between reception of DL DCI (scheduling DCI for a PDSCH) and a PDSCH corresponding to the DCI (PDSCH scheduled by the DCI) is smaller than a threshold "timeDurationForQCL," and at least one configured TCI state for the serving cell with the scheduled PDSCH includes qcl-Type set to 'typeD,' the UE may follow PDSCH Operations 1 to 5 described above.

Irrespective of tci-PresentInDCI and tci-PresentInDCI-1-2 in an RRC connected mode, if the UE is provided with DLorJoint-TCIState, offset between reception of DL DCI (scheduling DCI for a PDSCH) and a PDSCH corresponding to the DCI (PDSCH scheduled by the DCI) is smaller than a threshold "timeDurationForQCL," and at least one configured TCI state for the serving cell with the scheduled PDSCH includes qcl-Type set to 'typeD,' the UE may follow at least one of PDSCH Operations 1A to 2A below irrespective of configuration of followUnifiedTCIstate.

### > PDSCH Operation 1A

If an indicated TCI state is associated with a PCI of a serving cell , the indicated TCI state is applied to reception of the PDSCH.

### > PDSCH Operation 2A

If an indicated TCI state is associated with a PCI different from the PCI of the serving cell, the UE assumes that a DMRS port for the PDSCH of the serving cell is QCLed with RS(s) regarding a QCL parameter used to indicate PDCCH quasi co-location (QCL) on a CORESET with lowest controlResourceSetId (CORESET-ID) in the latest slot in which one or more CORESETs in an active BWP of the serving cell are monitored by the UE, the CORESET being associated with a monitored search space. If QCL type D properties for multiple CORESETs in a certain slot are different from each other in multiple CCs in the band, a QCL assumption for a CORESET for a CC with the lowest ID is applied to PDSCHs on all the CCs in the band. The QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the plurality of CCs in the band, are monitored by the UE, the CORESET being associated with a monitored search space. In this case (case where the indicated TCI state is associated with a PCI different from the PCI of the serving cell), if a QCL type D property of a PDSCH DMRS is different from a QCL type D property of a PDCCH DMRS that overlaps the PDSCH DMRS in at least one symbol, the UE assumes that reception of a PDCCH associated with the CORESET is prioritized. This is also applied to a case of intra-band CA (case where the PDSCH and the CORESET are present in different respective component carriers).

### <<Embodiment #1-2>>

### {Physical Layer Procedure / Antenna Port QCL for Data}

Irrespective of tci-PresentInDCI and tci-PresentInDCI-1-2 in an RRC connected mode, if offset between reception of DL DCI (scheduling DCI for a PDSCH) and a PDSCH corresponding to the DCI (PDSCH scheduled by the DCI) is smaller than a threshold "timeDurationForQCL," and at least one configured TCI state for the serving cell with the scheduled PDSCH includes qcl-Type set to 'typeD,' the UE may follow at least one of PDSCH Operations 1B to 2B below.

### > PDSCH Operation 1B

If the UE is not provided with DLorJoint-TCIState, or if the UE is provided with DLorJoint-TCIState, and an indicated TCI state is associated with a PCI different from a PCI of a serving cell , irrespective of configuration of followUnifiedTCIstate, the UE may follow at least one of PDSCH Operations 1B-1 below and PDSCH Operations 2 to 5 described above.

### >> PDSCH Operation 1B-1

The UE assumes that a DMRS port for the PDSCH of the serving cell is QCLed with RS(s) regarding a QCL parameter used to indicate PDCCH quasi co-location (QCL) on a CORESET with lowest controlResourceSetId (CORESET-ID) in the latest slot in which one or more CORESETs in an active BWP of the serving cell are monitored by the UE, the CORESET being associated with a monitored search space. If the UE is provided with DLorJoint-TCIState, and QCL type D properties for multiple CORESETs in a certain slot are different from each other in multiple CCs in the band, a QCL assumption for a CORESET for a CC with the lowest ID is applied to PDSCHs on all the CCs in the band. The QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space. In this case (if the UE is not provided with DLorJoint-TCIState, or if the UE is provided with DLorJoint-TCIState, and an indicated TCI state is associated with a PCI different from a PCI of a serving cell , irrespective of configuration of followUnifiedTCIstate), if a QCL type D property of a PDSCH DMRS is different from a QCL type D property of a PDCCH DMRS that overlaps the PDSCH DMRS in at least one symbol, the UE assumes that reception of a PDCCH associated with the CORESET is prioritized. This is also applied to a case of intra-band CA (case where the PDSCH and the CORESET are present in different respective component carriers).

### > PDSCH Operation 2B

If the UE is provided with DLorJoint-TCIState, and an indicated TCI state is associated with a PCI of a serving cell , irrespective of configuration of followUnifiedTCIstate, the indicated TCI state is applied to reception of the PDSCH.

According to this embodiment, the UE can appropriately determine a default QCL assumption for a PDSCH.

### <Embodiment #2>

This embodiment relates to a default QCL assumption for A-CSI-RS.

When a scheduling offset between reception of DCI and reception of an A-CSI-RS triggered by the DCI is smaller than a threshold, and a configured TCI state includes QCL type D, a UE may perform a determination operation for default QCL assumption in such a manner as that described in an example in FIG. 8. In the description of FIG. 8 in Embodiment #1, the PDSCH and an A-CSI-RS may be used interchangeably.

### <<Embodiment #2-1>>

### {Physical Layer Procedure / CSI Reporting and CSI-RS Triggering · Activation for Data}

### {A-CSI Reporting · A-CSI-RS when Triggering PDCCH and CSI-RS Include Same Numerologies}

A trigger state is started by using a CSI request field in the DCI. The UE may follow at least one of A-CSI Operations 1, 2, and 3 and A-CSI Operation 4A below.

### > A-CSI Operation 4A

For each A-CSI-RS resource in a CSI-RS resource set associated with each CSI triggering state, via higher layer signaling of qcl-Info including a list of references of TCI-State for an A-CSI-RS resource associated with a CSI triggering state, QCL configuration and a QCL type for a QCL source associated with the CSI triggering state are indicated for the UE. If State referring to the list is configured with reference to an RS configured with qcl-Type set to 'typeD,' the RS may be SS/PBCH blocks located in the same CC / DL BWP or different CCs / DL BWPs, or CSI-RS resources located in the same CC / DL BWP or different CCs / DL BWPs and configured as periodic or semi-persistent. The UE may follow A-CSI Operation 4-1A below.

### >> A-CSI Operation 4-1A

When scheduling offset between the last symbol of the PDCCH that delivers the triggering DCI and the first symbol of the A-CSI-RS resource in NZP-CSI-RS-ResourceSet configured without a higher layer parameter "trs-Info" (tracking RS information) is one of Cases 1 to 3 described above, the UE may follow at least one of A-CSI Operations 4-1-1 to 4-1-4 and 4-1-6 described above and A-CSI Operation 4-1-5A below.

### >>> A-CSI Operation 4-1-5A (case where a DL signal is absent in single-TRP transmission)

In a case other than the cases of A-CSI Operations 4-1-1 to 4-1-4, if at least one CORESET is configured for a BWP in which the A-CSI-RS is received, the UE may follow at least one of A-CSI Operations 4-1-5A-1 to 4-1-5A-2 below.

### >>>> A-CSI Operation 4-1-5A-1

If the UE is not provided with DLorJoint-TCIState, or if the UE is provided with DLorJoint-TCIState, and an indicated TCI state is associated with a PCI different from a PCI of a serving cell , irrespective of configuration of followUnifiedTCIstate, the UE applies, when receiving the A-CSI-RS, a QCL assumption used for a CORESET with lowest controlResourceSetId in the latest slot in which one or more CORESETs in an active BWP of the serving cell are monitored, the CORESET being associated with a monitored search space. If the UE is provided with DLorJoint-TCIState, and QCL type D properties for multiple CORESETs in a certain slot are different from each other in multiple CCs in the band, a QCL assumption for a CORESET for a CC with the lowest ID is applied to A-CSI-RSs on all the CCs in the band. The QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space.

### >>>> A-CSI Operation 4-1-5A-2

If the UE is provided with DLorJoint-TCIState, and an indicated TCI state is associated with a PCI of a serving cell , irrespective of configuration of followUnifiedTCIstate, the indicated TCI state is applied to the A-CSI-RS.

### <<Embodiment #2-2>>

### {Physical Layer Procedure / CSI Reporting and CSI-RS Triggering · Activation for Data}

### {A-CSI Reporting · A-CSI-RS when Triggering PDCCH and CSI-RS Include Same Numerologies}

A trigger state is started by using a CSI request field in the DCI. The UE may follow at least one of A-CSI Operations 1, 2, and 3 and A-CSI Operation 4B below.

### > A-CSI Operation 4B

For each A-CSI-RS resource in a CSI-RS resource set associated with each CSI triggering state, via higher layer signaling of qcl-Info including a list of references of TCI-State for an A-CSI-RS resource associated with a CSI triggering state, QCL configuration and a QCL type for a QCL source associated with the CSI triggering state are indicated for the UE. If State referring to the list is configured with reference to an RS configured with qcl-Type set to 'typeD,' the RS may be SS/PBCH blocks located in the same CC / DL BWP or different CCs / DL BWPs, or CSI-RS resources located in the same CC / DL BWP or different CCs / DL BWPs and configured as periodic or semi-persistent. The UE may follow A-CSI Operation 4-1B below.

### >> A-CSI Operation 4-1B

When scheduling offset between the last symbol of the PDCCH that delivers the triggering DCI and the first symbol of the A-CSI-RS resource in NZP-CSI-RS-ResourceSet configured without a higher layer parameter "trs-Info" (tracking RS information) is one of Cases 1 to 3 described above, the UE may follow at least one of A-CSI Operations 4-1-1 to 4-1-4 and 4-1-6 described above and A-CSI Operations 4-1-5B, 4-1-7B, and 4-1-8B below.

### >>> A-CSI Operation 4-1-5B (case where a DL signal is absent in single-TRP transmission)

In a case other than the cases of A-CSI Operations 4-1-1 to 4-1-4, if the UE is not provided with DLorJoint-TCIState and if at least one CORESET is configured for a BWP in which the A-CSI-RS is received, the UE applies, when receiving the A-CSI-RS, a QCL assumption used for a CORESET with lowest controlResourceSetId in the latest slot in which one or more CORESETs in an active BWP of the serving cell are monitored, the CORESET being associated with a monitored search space.

### >>>> A-CSI Operation 4-1-7B

In a case other than the cases of A-CSI Operations 4-1-1 to 4-1-4, 4-1-5B, and 4-1-6, if the UE is provided with DLorJoint-TCIState, an indicated TCI state is associated with a PCI different from a PCI of a serving cell , irrespective of configuration of followUnifiedTCIstate, and at least one CORESET is configured for a BWP in which the A-CSI-RS is received, the UE applies, when receiving the A-CSI-RS, a QCL assumption used for a CORESET with lowest controlResourceSetId in the latest slot in which one or more CORESETs in an active BWP of the serving cell are monitored, the CORESET being associated with a monitored search space. If QCL type D properties for multiple CORESETs in a certain slot are different from each other in multiple CCs in the band, a QCL assumption for a CORESET for a CC with the lowest ID is applied to A-CSI-RSs on all the CCs in the band. The QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space.

### >>>> A-CSI Operation 4-1-8B

If the UE is provided with DLorJoint-TCIState, and an indicated TCI state is associated with a PCI of a serving cell , irrespective of configuration of followUnifiedTCIstate, the indicated TCI state is applied to the A-CSI-RS.

According to this embodiment, the UE can appropriately determine a default QCL assumption for an A-CSI-RS.

### <Embodiment #3>

This embodiment relates to a default QCL assumption for PDCCH and a default QCL assumption for PDSCH.

In a case where a UE is provided with DLorJoint-TCIState and where followUnifiedTCIstate is not 'enabled,' a default QCL assumption for a PDSCH scheduled by CORESET 0 is indefinite.

### {Physical Layer Procedure for Control / UE Procedure for Determination of Physical Downlink Control Channel Allocation}

In a CORESET with index 0 (CORESET 0), the UE may follow at least one of CORESET 0 Operation 1 described above and CORESET 0 Operation 2A below.

### > CORESET 0 Operation 2A

In a case other than the case of CORESET 0 Operation 1, the UE assumes that a DMRS antenna port for PDCCH reception in the CORESET and a DMRS antenna port for PDSCH reception scheduled by a DCI format provided by the PDCCH reception in the CORESET are QCLed with one of DL RSs 1 to 2 described above.

According to this embodiment, the UE can appropriately determine a default QCL assumption for a PDSCH scheduled by CORESET 0.

### <Embodiment #4>

This embodiment relates to variations of Embodiment #1/#2.

In each of the cases of "if the UE is provided with DLorJoint-TCIState, and QCL type D properties for multiple CORESETs in a certain slot are different from each other in multiple CCs in the band, a QCL assumption for a CORESET for a CC with the lowest ID is applied to PDSCHs on all the CCs in the band" in Embodiment #1, "if the UE is provided with DLorJoint-TCIState, and QCL type D properties for multiple CORESETs in a certain slot are different from each other in multiple CCs in the band, a QCL assumption for a CORESET for a CC with the lowest ID is applied to A-CSI-RSs on all the CCs in the band" and "if QCL type D properties for multiple CORESETs in a certain slot are different from each other in multiple CCs in the band, a QCL assumption for a CORESET for a CC with the lowest ID is applied to A-CSI-RSs on all the CCs in the band" in Embodiment #2, and "the QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space" in Embodiment #1/#2, one "QCL assumption" is applied to all the CCs. The "QCL assumption" may be "QCL assumption of QCL type D" or "QCL assumption of QCL type C or QCL type D."

Restriction based on Rel. 15 requires QCL types A and B to be RSs in the same CC, in carrier aggregation (CA). As described above, limiting the "QCL assumption" to QCL type C/D can avoid applying a QCL type A/B property measured in another CC to a PDSCH/A-CSI-RS and can prevent performance degradation.

In the case of "the QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space" in Embodiment #1/#2, the UE may identify a QCL type A/D RS of each CC by using a QCL assumption for the CORESET. For example, when the CC with the lowest ID is CC #1, and, in the QCL assumption for the CORESET, a QCL type A RS is TRS #3 on BWP #1 in CC #1 and a QCL type D RS is TRS #3 on BWP #1 in CC #1 and TRS #3 on BWP #1 in CC #1, in a QCL assumption for another CC #X in the same band, a QCL type A RS may be TRS #3 on BWP #1 in CC #X and a QCL type D RS may be TRS #3 on BWP #1 in CC #X. For example, when the CC with the lowest ID is CC #1, and, in the QCL assumption for the CORESET, a QCL type A RS is TRS #3 on BWP #1 in CC #1 and a QCL type D RS is TRS #3 on BWP #1 in CC #1 and CSI-RS #3 (with repetition) on BWP #1 in CC #1, in a QCL assumption for another CC #X in the same band, a QCL type A RS and a QCL type D RS may be CSI-RS #3 (with repetition) on BWP #1 in CC #1. When the QCL type D RS is a CSI-RS with repetition, a QCL type D RS common to multiple CCs may be allowed, and thus, in this example, a QCL type D RS of each CC is assumed to be an RS of CC #1.

In Embodiment #1/#2, "if QCL type D properties for multiple CORESETs in a certain slot are different from each other in multiple CCs in the band, a QCL assumption for a CORESET for a CC with the lowest ID is applied to PDSCHs/A-CSI-RSs on all the CCs in the band" "if QCL type D properties for multiple CORESETs in a certain slot are different from each other in multiple CCs in the band, a QCL assumption for a CORESET for a CC with the lowest ID takes priority over PDSCHs/A-CSI-RSs on all the CCs in the band," and "if QCL type D properties for multiple CORESETs in a certain slot are different from each other in multiple CCs in the band, the UE prioritizes a QCL assumption for a CORESET for a CC with the lowest ID over PDSCHs/A-CSI-RSs on all the CCs in the band" may be used interchangeably.

TCI-State (TCI state) includes QCL-Info (QCL information). QCL-Info may include referenceSignal (reference signal (RS) used to provide QCL information), qcl-Type (QCL type), and cell (serving cell for which the referenceSignal is configured). Depending on configuration of the cell, the RS may be located on a serving cell other than a serving cell for which the TCI-State is configured, only when the qcl-Type is set to typeC or typeD.

Only when the TCI-State is explicitly configured, one "QCL assumption" described above may be "QCL assumption of QCL type D" or "QCL assumption of QCL type C or QCL type D."

In other words, when QCL type D properties for multiple CORESETs in a certain slot are different from each other in multiple CCs in the band, the UE may follow Multi-CC Operations 1 and 2 below.

### > Multi-CC Operation 1

If the TCI-State is not configured by RRC, a QCL assumption for a CORESET for a CC with the lowest ID, from among the multiple CCs, is applied to PDSCHs/A-CSI-RSs on all the CCs in the band. The QCL assumption may be RS(s) regarding a QCL parameter used to indicate PDCCH QCL on a CORESET with lowest controlResourceSetId in the latest slot in which one or more CORESETs in an active BWP of a CC with the lowest ID, from among the multiple CCs in the band, are monitored by the UE, the CORESET being associated with a monitored search space.

### > Multi-CC Operation 2

If the TCI-State is configured by RRC, a QCL type C/D assumption for a CORESET for a CC with the lowest ID, from among the multiple CCs, is applied to PDSCHs/A-CSI-RSs on all the CCs in the band, and, in each CC, a QCL type A/B assumption for a CORESET with the lowest CORESET ID in the latest slot in which one or more CORESETs are monitored is applied to a PDSCH/A-CSI-RS on the CC.

According to this embodiment, the UE can appropriately determine a QCL assumption of a specific type.

### <Supplement>

### <<UE Capability Information / Higher Layer Parameter>>

At least one of the above-described embodiments may be applied only to the UE that has reported a specific UE capability or that supports the specific UE capability.

The specific UE capability may indicate at least one of the following:
- Support of processing/operation/control/information for at least one of embodiments above

The specific UE capability may be capability applied over all the frequencies (commonly irrespective of frequency), capability per frequency (for example, a cell, a band, a BWP), capability per frequency range (for example, Frequency Range 1 (FR1), FR2, FR3, FR4, FR5, FR2-1, FR2-2), or capability per subcarrier spacing (SCS).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when specific information regarding the above-described embodiment is configured for the UE by higher layer signaling. For example, the specific information may be information indicating enabling of at least one function of the above-described embodiments, any RRC parameter for specific release (for example, Rel. 18), or the like. "_r18" may be given to the name of the RRC parameter.

When not supporting at least one of the specific UE capabilities or not configured with the specific information, the UE may apply operation of Rel. 15/16, for example.

According to the UE capability / higher layer parameter above, the UE can implement the above functions while maintaining compatibility with an existing specification.

### (Supplementary Note)

Regarding one embodiment of the present disclosure, the following supplementary notes of the invention will be given.

### {Supplementary Note 1}

A terminal including:
a receiving section that receives information regarding transmission configuration indication (TCI) state for multiple types of signals; and
a control section that, when a time offset between downlink control information and a downlink signal indicated by the downlink control information is smaller than a threshold and when the TCI state is associated with a physical cell identifier (PCI) different from a PCI of a serving cell, determines a quasi co-location (QCL) assumption for the downlink signal.

### {Supplementary Note 2}

The terminal according to supplementary note 1, wherein when multiple QCL assumptions for multiple control resource sets in one slot are different from each other in multiple component carriers in a band of the downlink signal, the QCL is determined based on a control resource set in a component carrier with a lowest ID, from among the multiple component carriers.

### {Supplementary Note 3}

The terminal according to supplementary note 1 or 2, wherein the downlink signal is a physical downlink shared channel.

### {Supplementary Note 4}

The terminal according to supplementary note 1 or 2, wherein the downlink signal is an aperiodic channel state information reference signal.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

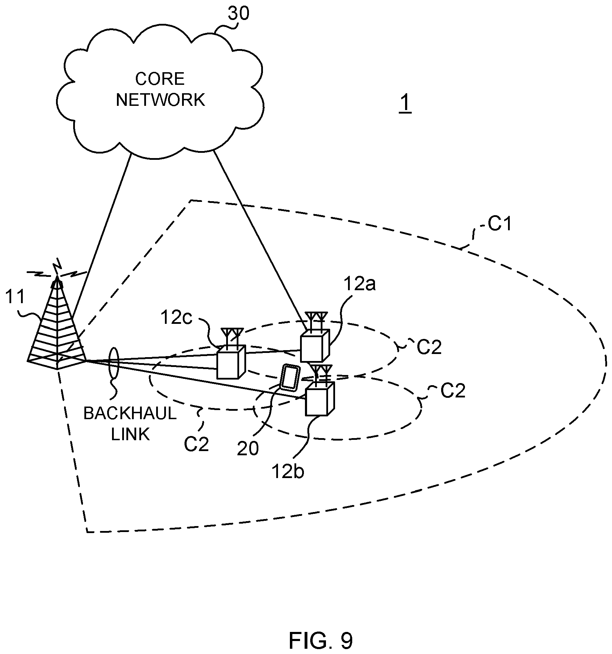

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between multiple Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between multiple base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the multiple base stations 10. The user terminal 20 may use at least one of carrier aggregation (CA) and dual connectivity (DC) using multiple component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The multiple base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

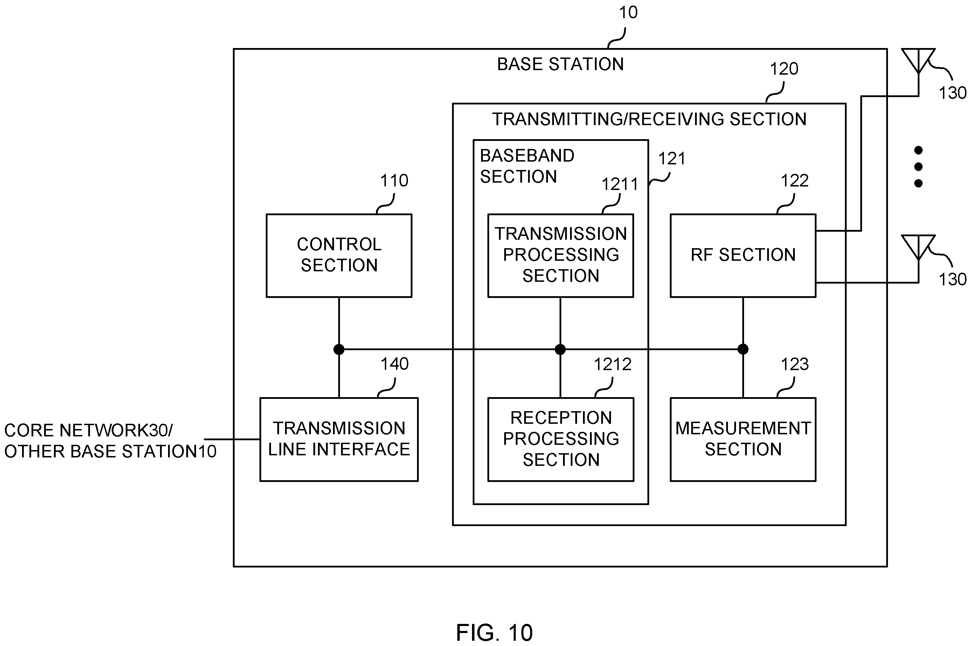

FIG. 10 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement regarding the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information regarding a transmission configuration indication (TCI) state for multiple types of signals. The control section 110 may, when time offset between downlink control information and a downlink signal indicated by the downlink control information is smaller than a threshold, and the TCI state is associated with a physical cell identifier (PCI) different from a serving cell PCI, determine a quasi co-location (QCL) assumption for the downlink signal.

### (User Terminal)

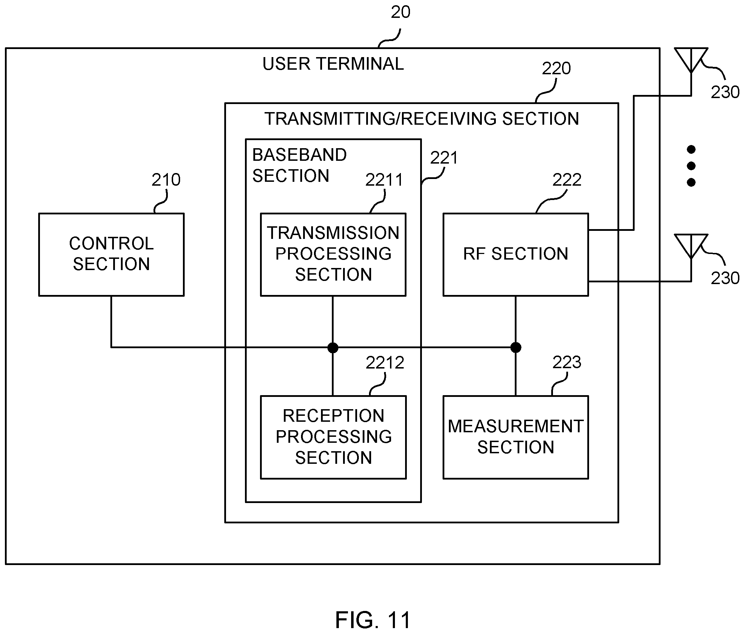

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the

### transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement regarding the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information regarding a transmission configuration indication (TCI) state for multiple types of signals. The control section 210 may, when time offset between downlink control information and a downlink signal indicated by the downlink control information is smaller than a threshold, and the TCI state is associated with a physical cell identifier (PCI) different from a PCI of a serving cell, determine a quasi co-location (QCL) assumption for the downlink signal.

When multiple QCL assumptions for multiple control resource sets in one slot are different from each other in multiple component carriers in a band for the downlink signal, the QCL may be determined based on a control resource set in a component carrier with a lowest ID, from among the multiple component carriers.

The downlink signal may be a physical downlink shared channel.

The downlink signal may be an aperiodic channel state information reference signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

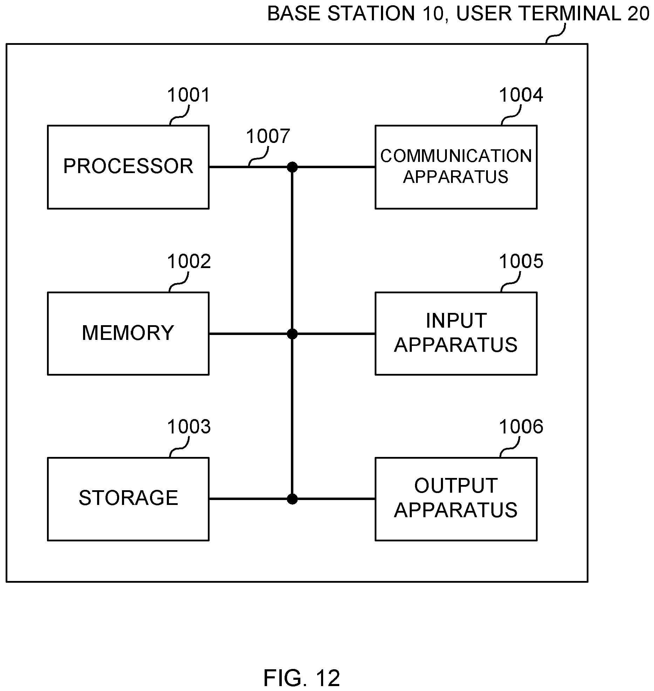

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, multiple processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be used interchangeably. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or multiple periods (frames) in the time domain. Each of one or multiple periods (frames) constituting a radio frame may be referred to as a "subframe." Furthermore, a subframe may be constituted of one or multiple slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or multiple symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include multiple mini-slots. Each mini-slot may be constituted of one or multiple symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be used interchangeably.

For example, one subframe may be referred to as a "TTI," multiple consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or multiple consecutive subcarriers in the frequency domain. The number of subcarriers included in an RB may be the same regardless of numerology, and, for example, may be 12. The number of subcarriers included in an RB may be determined based on numerology.

Also, an RB may include one or multiple symbols in the time domain, and may be one slot, one mini-slot, one subframe, or one TTI in length. One TTI, one subframe, and so on each may be constituted of one or multiple resource blocks.

Note that one or multiple RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or multiple resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or multiple BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via multiple network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or multiple (for example, three) cells. When a base station accommodates multiple cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interpreted as a case that the base station indicates, for the terminal, control/operation based on the information, and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

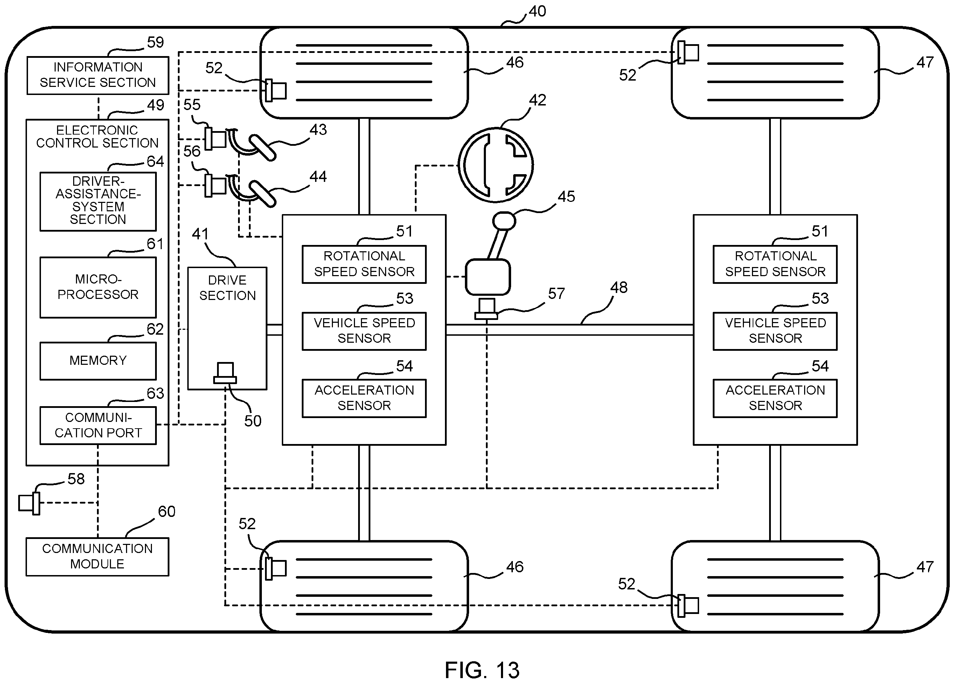

FIG. 13 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the drive section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between multiple user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or multiple network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. Multiple systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be used interchangeably. In the present disclosure, words such as "good," "poor," "large," "small," "high," "low," "early," "late," "wide," "narrow," and the like may be used interchangeably irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be used interchangeably irrespective of positive degree, comparative degree, and superlative degree (for example, "highest" may be used interchangeably with "i-th highest," and vice versa).

In the present disclosure, "of," "for," "regarding," "regarding," "associated with," and the like may be used interchangeably.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information regarding transmission configuration indication (TCI) state for multiple types of signals; and
a control section that, when a time offset between downlink control information and a downlink signal indicated by the downlink control information is smaller than a threshold and when the TCI state is associated with a physical cell identifier (PCI) different from a PCI of a serving cell, determines a quasi co-location (QCL) assumption for the downlink signal.

2. The terminal according to claim 1, wherein
when multiple QCL assumptions for multiple control resource sets in one slot are different from each other in multiple component carriers in a band of the downlink signal, the QCL assumption is determined based on a control resource set in a component carrier with a lowest ID, from among the multiple component carriers.

3. The terminal according to claim 1, wherein
the downlink signal is a physical downlink shared channel.

4. The terminal according to claim 1, wherein
the downlink signal is an aperiodic channel state information reference signal.

5. A radio communication method for a terminal, the radio communication method comprising:
receiving information regarding transmission configuration indication (TCI) state for multiple types of signals; and
determining, when a time offset between downlink control information and a downlink signal indicated by the downlink control information is smaller than a threshold and when the TCI state is associated with a physical cell identifier (PCI) different from a PCI of a serving cell, a quasi co-location (QCL) assumption for the downlink signal.

6. A base station comprising:
a transmitting section that transmits information regarding transmission configuration indication (TCI) state for multiple types of signals; and
a control section that, when a time offset between downlink control information and a downlink signal indicated by the downlink control information is smaller than a threshold and when the TCI state is associated with a physical cell identifier (PCI) different from a PCI of a serving cell, determines a quasi co-location (QCL) assumption for the downlink signal.
